# EUROPÄISCHE PATENTANMELDUNG

(11) **EP 2 763 508 A2**
(43) Veröffentlichungstag der Anmeldung: **06.08.2014**
(21) Anmeldenummer: 14153254.9
(22) Anmeldetag: 30.01.2014
(51) Int. Cl.: H05B 37/00

(54) **Verfahren und System zur Erkennung einer Position oder Form eines Leuchtelements**

(30) Priorität: 31.01.2013 DE 102013201650
(71) Anmelder: Fraunhofer-Gesellschaft zur Förderung der angewandten Forschung e.V., 80686 München (DE)
(72) Erfinder: Hesse, Jan, 01187 Dresden (DE)
(74) Vertreter: Zimmermann, Tankred Klaus

(57) **Zusammenfassung**

Ein Verfahren zur Erkennung einer Position und/oder Form von mindestens einem über eine jeweilige Identifikationsnummer ansteuerbaren Leuchtelement in einer Umgebung umfasst die Schritte des Identifizierens von mindestens einem in der Umgebung vorhandenen Leuchtelement anhand der jeweiligen durch das Leuchtelement übermittelten Identifikationsnummer und das Ansteuern des identifizierten Leuchtelements, um ein Leuchten des angesteuerten Leuchtelements zu veranlassen. Ferner umfasst das Verfahren den Schritt des Erfassens des angesteuerten Leuchtelements mittels einer Kameraaufnahme, um die Position und/oder die Form des angesteuerten Leuchtelements in der Umgebung anhand des Leuchtens auf Basis eines Kameraaufnahmenabgleichs zwischen der erfassten Kameraaufnahme und einer weiteren zuvor erfassten Kameraaufnahme des Leuchtelements zu ermitteln.

## Beschreibung

Ausführungsbeispiele der vorliegenden Erfindung beziehen sich auf ein Verfahren, eine Software und ein System zur Erkennung einer Position sowie der Form und Eigenschaften eines ansteuerbaren Leuchtelements in einer (dreidimensionalen) Umgebung.

Neben herkömmlichen Glühlampen oder Halogenlampen finden sogenannte Leuchtelemente auf SSL-Technologie-Basis (Solid-State-Lightening, Festkörper-Beleuchtung) zunehmend Verbreitung. Zu den SSL-Leuchtelementen zählen einerseits LEDs (Leuchtdioden), die bereits am Massenmarkt angekommen sind, und andererseits OLEDs (organische Leuchtdioden). Während LED-Leuchtelemente als Punktlichtquelle insbesondere als Spot-Beleuchtung Anwendung finden, stellen OLED-Leuchtelemente Flächenlichtquellen dar, mit denen vollkommen neuartige Beleuchtungsanwendungen realisiert werden können. Dies schafft auf der einen Seite neue Möglichkeiten hinsichtlich des Lichtdesigns (z.B. Kombination von punktförmigen LEDs und flächigen OLED-Lichtquellen), auf der anderen Seite jedoch auch den Bedarf hinsichtlich innovativer Steuerungen.

Deshalb ist es Aufgabe der vorliegenden Erfindung ein Konzept zur Steuerung von unterschiedlichen Leuchtelementen zu schaffen.

Diese Aufgabe wird durch die unabhängigen Ansprüche gelöst.

Ausführungsbeispiele der vorliegenden Erfindung schaffen ein Verfahren zur Erkennung einer Position und/oder Form (bzw. allgemein einer geometrischen Eigenschaft) von mindestens einem über eine jeweilige Identifikationsnummer ansteuerbaren Leuchtelement in einer Umgebung. Das Verfahren umfasst die Schritte des Identifizierens von mindestens einem in der Umgebung vorhandenen Leuchtelement anhand der jeweiligen durch das Leuchtelement übermittelten Identifikationsnummer und das Ansteuern des identifizierten Leuchtelements, um ein Leuchten des angesteuerten Leuchtelements zu veranlassen. Ferner umfasst das Verfahren den Schritt des Erfassens des angesteuerten Leuchtelements mit einer Kameraaufnahme, um die Position und/oder die Form des angesteuerten Leuchtelements in der Umgebung anhand des Leuchtens zu ermitteln. Dieses Erkennen des Leuchtens kann beispielsweise auf Basis eines Kameraaufnahmenabgleichs zwischen der erfassten Kameraaufnahme und einer weiteren zuvor erfassten Kameraaufnahme des Leuchtelements erfolgen.

Kerngedanke der vorliegenden Erfindung ist es, dass eine Zuordnung zwischen einer Umgebung, wie z.B. einem dreidimensionalen Raum, und einer Position und Form einer einzeln ansteuerbaren Leuchteinheit, wie z.B. einer OLED, in dieser Umgebung dadurch geschaffen werden kann, dass mittels einer Kamera das Ansteuern der Leuchteinheit bzw. das Feedback der Leuchteinheit, z.B. in Form eines Leuchtens derselben, beobachtbar ist. Hierzu wird im Vorfeld der Raum optisch mittels einer oder mehrerer Aufnahmen erfasst und dann das zu ortenden Leuchtelement angesteuert bzw. ein- und/oder ausgeschaltet, während gleichzeitig eine Kameraaufnahme (des Umfelds inkl.) der Leuchteinheit genommen wird. Diese Kameraaufnahme kann mittels der vorherigen Kameraaufhahme (zur Erfassung des Umfelds) verglichen werden, so dass auf Basis eines einfachen Helligkeitsabgleichs bzw. einer Helligkeitsveränderung die Position und die Form der jeweiligen Lampe zu detektieren ist. Die hinsichtlich der Position bzw. Form zu bestimmende Leuchteinheit ist anhand einer eindeutigen Identifikationsnummer, die beispielsweise über ein Kommunikationsmodul bzw. über einen Funk Chip ausgesendet wird, identifizierbar. So können auch mehrere in einem Raum vorhandene Leuchteinheiten einzeln angesteuert werden, was auch die Zuordnung von unterschiedlichen Positionen zu den unterschiedlichen Leuchteinheiten ermöglicht. Vorteilhafterweise können somit komplexe Lichtinstallationen, die beispielsweise eine Kombination aus LED- und OLED-Lichtquellen aufweisen, erfasst und auf Basis der Erfassung gesteuert werden, sodass diese nicht nur zur reinen Raumerhellung betragen, sondern insbesondere als Gestaltungselement genutzt werden können. Die genaue Kenntnis der Position und/oder der Form der jeweiligen Leuchteinheit ermöglicht es, individuelle Lichtszenarien zu erzeugen, die sich beispielsweise abhängig von der Tageszeit, der Stimmung bzw. der Beschäftigung des Nutzers sowie der Nutzung des Raumes anpassen lassen.

Weitere Ausführungsbeispiele schaffen ein System zur Erkennung einer Position und/oder Form von mindestens einem über eine jeweilige Identifikationsnummer ansteuerbaren Leuchtelement in einer Umgebung. Das System umfasst ein Kommunikationsmodul und eine Kamera. Das Kommunikationsmodul ist ausgebildet, um Kommunikationssignale, z.B. per Funk, die die Identifikationsnummer umfassen, zu senden und/oder zu empfangen, so dass anhand der Identifikationsnummer ein in der Umgebung vorhandenes Lichtelement identifizierbar ist, wobei das Kommunikationsmodul ferner ausgebildet ist, um das identifizierte Leuchtelement anzusteuern, um so ein Leuchten des angesteuerten Leuchtelements zu veranlassen. Die Kamera ist ausgebildet, um eine Kameraaufnahme des angesteuerten Leuchtelements zu erfassen, um die Position und/oder die Form des angesteuerten Leuchtelements in der Umgebung anhand des Leuchtens z.B. auf Basis eines Kameraaufnahmenabgleichs zwischen der erfassten Kameraaufnahme und einer weiteren zuvor erfassten Kameraaufnahme des Leuchtelements zu ermitteln. Somit erfolgt das Ansteuern des identifizierten Leuchtelements gleichzeitig mit dem Erfassen der Kameraaufnahme.

Dieses System kann entsprechend Ausführungsbeispielen in der Art beispielsweise auf einem Tablet-Computer oder in einem Smartphone integriert sein, wobei Vorgänge wie der Kameraaufnahmenabgleich und/oder das Ermitteln des 3D-Modells der Umgebung auf einem Server outgesourced sein können.

Ausführungsbeispiele der vorliegenden Erfindung werden anhand der beiliegenden Zeichnungen näher erläutert. Es zeigen:
- Fig. 1a: ein schematische Flussdiagramm des Verfahrens zur Erkennung der Position bzw. Form des Leuchtelements gemäß einem Ausführungsbeispiel;
- Fig. 1b: ein schematisches Blockschaltbild des Systems zur Erfassung der Position bzw. Form des Leuchtelements gemäß einem weiteren Ausführungsbeispiel.
- Fig. 2: ein schematisches Flussdiagramm des Verfahrens zur Erkennung der Position bzw. Form des Leuchtelements mit optionalen Schritten; und
- Fig. 3: ein schematisches Blockschaltbild des Systems zur Erfassung der Position bzw. Form des Leuchtelements gemäß einem weiteren Ausführungsbeispiel.

Bevor nachfolgend Ausführungsbeispiele der vorliegenden Erfindung anhand der Figuren näher erläutert werden, wird an dieser Stelle darauf hingewiesen, dass gleiche oder gleichwirkende Elemente mit gleichen Bezugszeichen versehen sind, so dass die Beschreibung derer aufeinander angewendet werden kann bzw. austauschbar ist.

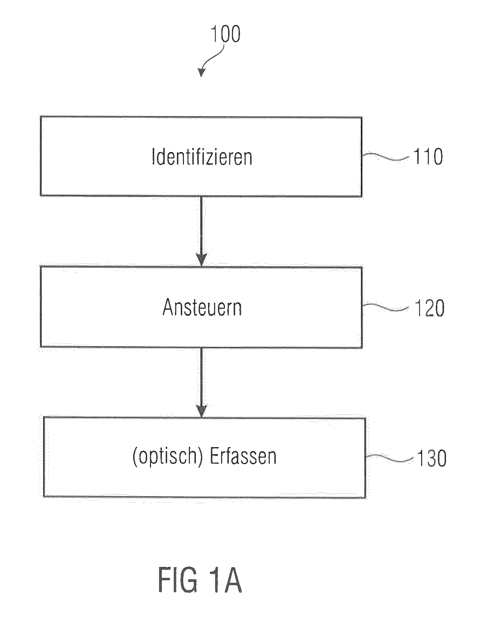

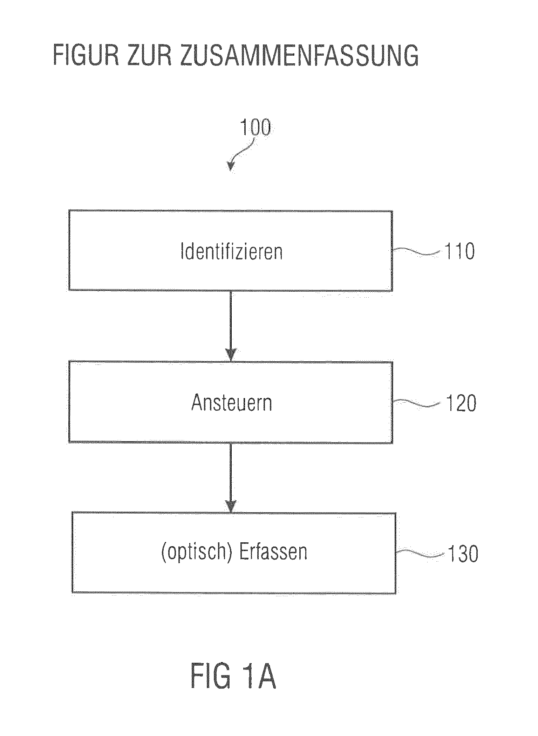

Fig. 1a zeigt ein schematisches Flussdiagramm mit den Grundschritten 110, 120 und 130 des Verfahrens 100 zur Erkennung einer Position und/oder Form von mindestens einem über eine jeweilige Identifikationsnummer ansteuerbaren Leuchtelements (z.B. LED-, OLED- oder konventionelles Leuchtelemente) in einer Umgebung (z.B. in einem Raum). Das Verfahren umfasst die drei Schritte des Identifizierens 110 von mindestens einem in der Umgebung vorhandenen Leuchtelements anhand der jeweiligen durch das Leuchtelement übermittelten oder auslesbaren Identifikationsnummer und des Ansteuerns 120 des identifizierten Leuchtelements, um ein Leuchten des angesteuerten Leuchtelements zu veranlassen. Ferner umfasst das Verfahren den dritten Schritt des Erfassens 130 des angesteuerten Leuchtelements mittels einer Kameraaufnahme, um die Position und/oder die Form des angesteuerten Leuchtelements in der Umgebung (auf Basis eines Kameraabgleichs) zu ermitteln.

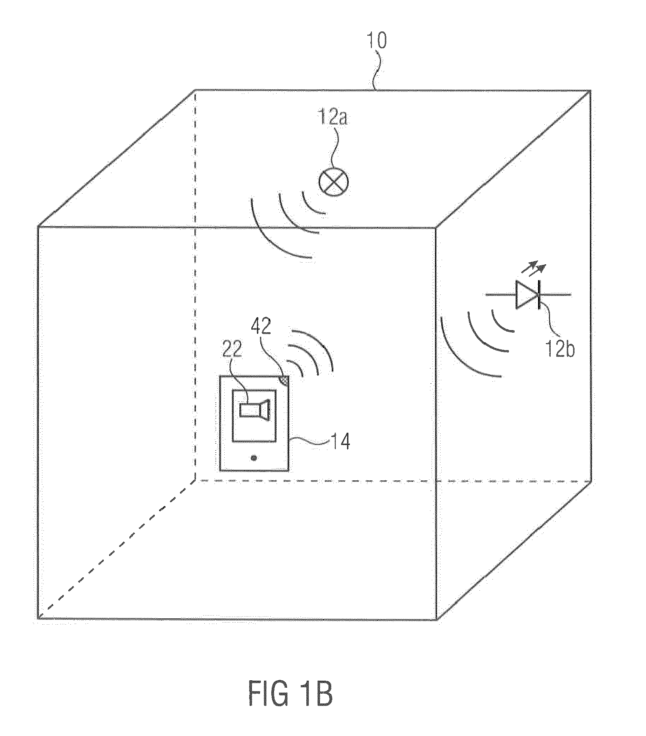

Das dargestellte Verfahren 100 wird anhand einer exemplarischen dargestellten Umgebungssituation detailliert mit Bezug auf Fig. 1b beschrieben. Hierbei wird davon ausgegangen, dass das Verfahren 100 auf einem (mobilen) Datenverarbeitungs-Gerät 14, wie z.B. einem Smartphone, Tablet-Computer oder allgemein Computer ausgeführt wird. Die (Datenverarbeitungs-) Vorrichtung 14 bzw. das (Datenverarbeitungs-) System 14 umfasst eine Kamera 22 und ein Kommunikationsmodul 42.

Fig. 1b zeigt eine Umgebung bzw. einen Raum 10 mit zwei Leuchtelementen 12a und 12b, die jeweils mit einem Kommunikationsmodul, wie z.B. mit einem Funk-Chip, ausgestattet oder gekoppelt sind, so dass diese einzeln über ihre Identifikationsnummern angesteuert werden können. Anhand dieser Identifikationsnummer sind die einzelnen Leuchtelemente 12a und 12b identifizierbar, indem diese beispielsweise die Identifikationsnummer in regelmäßigen Abständen (von beispielsweise 10 Sekunden) aussenden oder indem diese auf einen von der Vorrichtung 14 ausgesendeten Befehl ihre Identifikationsnummer übermitteln (Abfrage). Bevorzugterweise erfolgt die Kommunikation zwischen der Vorrichtung 14 und den Leuchteinheiten 12a und 12b per Funk, z.B. Kurzstreckenfunk, wie z.B. Bluetooth, ZigBee Light Link oder WLAN, wobei auch Teile der Kommunikationsstreckt kabelgebunden realisiert sein können. Auf Basis der über das Kommunikationsmodul 42 empfangenen Identifikationsnummern der einzelnen Leuchteinheiten 12a und/oder 12b kann die Vorrichtung 14 erkennen, welche Leuchteinheiten 12a und/oder 12b sich in der unmittelbaren Umgebung 10 befinden.

Um nun die Position der einzelnen Leuchteinheiten 12a und 12b zu ermitteln, werden die Leuchteinheiten 12a oder 12b einzeln angesteuert (ein- oder ausgeschaltet), um ein Leuchten oder zumindest kurzes Aufblinken zu bewirken. Über eine Kameraaufnahme, die über die integrierte Kamera 22 erhalten wird, kann das Leuchten bzw. das leuchtende Leuchtelement 12a oder 12b erkannt werden. Um eine eindeutige Zuordnung zwischen einem jeweiligen Leuchten eines Leuchtelements 12a oder 12b und einer jeweiligen Ansteuerung desselben zu erhalten, erfolgt die Kameraaufnahme bevorzugt gleichzeitig zu dem Ansteuern des Leuchtelements 12a oder 12b. So kann im Nachgang beispielsweise mittels eines Kameraaufnahmenabgleichs zwischen der erfassten Kameraaufnahme und einer weiteren zuvor erfassten Kameraaufnahme der Umgebung 10 des Leuchtelements 12a und/oder 12b (in welcher die Leuchtelemente 12a und/oder 12b beispielsweise nicht leuchten) die Position des angesteuerten Leuchtelements 12a oder 12b anhand der lokalen Helligkeitsdifferenz in den zwei Kameraaufnahmen ermittelt werden.

Analog zu der Ermittlung der Position der einzelnen Leuchteinheiten 12a oder 12b, ist es auch möglich, anhand der leuchtenden Kontur der angesteuerten Leuchteinheit 12a oder 12b die Form derselben auf Basis der Kameraaufnahme zu ermitteln. Hierbei wird in erster Linie unterschieden, ob es sich um ein Flächenleuchtelement, wie zum Beispiel um eine flächige OLED, oder um eine punktförmige Leuchteinheit, wie zum Beispiel einen LED-Spot, handelt. Parallel hierzu kann auch die genaue Form der Flächen-Leuchteinheiten oder eines Segments der Flächen-Leuchteinheiten erkannt werden. Wenn das Flächenleuchtelement unterschiedlicher Segmente mit unterschiedlicher Farbgebung aufweist, können auch die genauen Grenzen anhand der Kameraaufnahme identifiziert werden. Also ist der Bildprozessor dazu ausgebildet, um eine leuchtende (oder farbige) Kontur der Leuchteinheiten 12a und/oder 12b auf Basis eines Helligkeits- oder Farbabgleichs zu ermitteln.

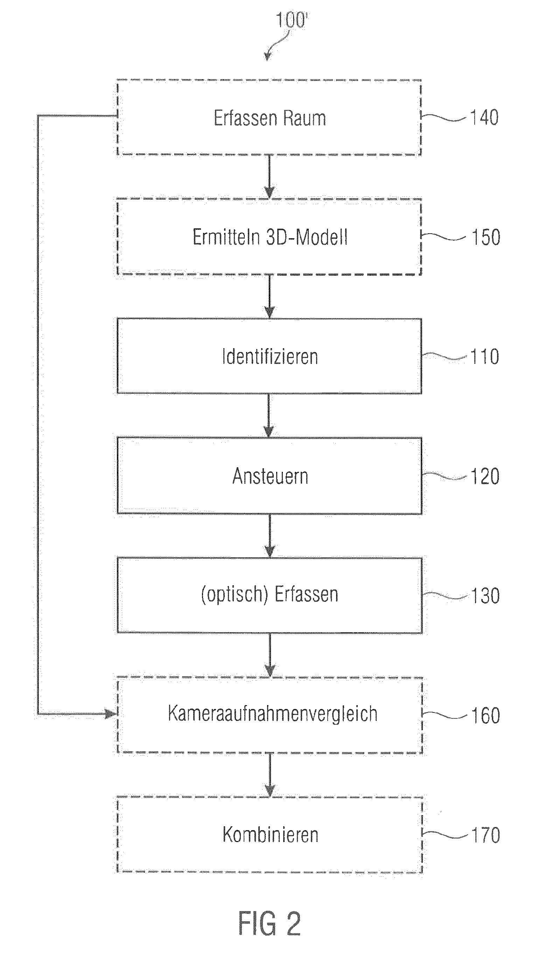

An dieser Stelle sei angemerkt, dass die zwei zeitlich versetzten Kameraaufnahmen des zu erfassenden Leuchtelements 12a oder 12b nicht zwingend 100-prozentig übereinstimmen müssen, aber zumindest einen gemeinsamen Bildausschnitt, der das Leuchtelement 12a oder 12b umfasst, aufweisen sollten. Mit anderen Worten ausgedrückt heißt das, dass die zwei zeitlich versetzten Kameraaufnahmen örtlich zueinander versetzt sein können, aber einen gemeinsamen Überlappbereich, in welchem sich das zu detektierende Leuchtelement 12a oder 12b befindet, aufweisen. Diese weitere Kameraaufnahme des Leuchtelements 12a oder 12b kann zuvor, also vor dem Ansteuern, mit der gleichen Kamera der Vorrichtung 14 erfasst werden. Infolgedessen kann das Verfahren den optionalen Schritt des vorherigen Erfassens der weiteren Kameraaufnahme umfassen, wie nachfolgend Bezug nehmend auf Fig. 2 ausgeführt wird.

Fig. 2 zeigt ein weiteres Flussdiagramm für ein Verfahren 100', das wie das Verfahren 100 die Schritte des Identifizierens 110, des Ansteuerns 120 und des optischen Erfassens 130 des zu detektierenden Leuchtelements umfassen.

Des Weiteren umfasst das Verfahren 100' den optionalen zeitlich vorgelagerten Schritt des Erfassens 140 der weiteren Kameraaufnahme, um den Raum bzw. die Raumdimensionen (optisch) zu erfassen. Dieser Schritt kann vor dem Identifizieren 110 der in dem Raum vorhandenen Leuchtelemente, aber auch direkt vor dem Ansteuern 120 der identifizierten Leuchtelemente erfolgen. Es sei angemerkt, dass bei der Ermittlung des dreidimensionalen Modells 150 auch weitere Daten, z.B. des Lagesensors der Kamera hinzugezogen werden können.

Ferner weist das Verfahren 100' den optionalen Schritt des Ermittelns eines dreidimensionalen Modells der Umgebung auf Basis der mindestens einen weiteren Kameraaufnahme auf. Dieses Ermitteln erfolgt beispielsweise auf Basis eines Kanten-Detektierungs-Algorithmus, so dass ein dreidimensionales Modell der Umgebung bzw. des Raums erhalten wird. Um alle Bereiche der Umgebung abzutasten oder um die dreidimensionale Erkennung zu verbessern, werden bevorzugterweise mehrere weitere Kameraaufnahmen bei dem Schritt 140 genommen. Auf Basis der bei dem Schritt 140 genommenen Kameraaufnahme erfolgt der oben angesprochene Kameraaufnahmenabgleich 160 nach dem (optischen) Erfassen 130 der Kameraaufnahme des angesteuerten Leuchtelements. Zur Illustration hierzu ist der weitere optionale Schritt des Kameraaufnahmenabgleichs 160 nach dem Erfassen 130 mit dem Schritt 140 verbunden.

Um nun eine Vielzahl von in dem Raum vorhandenen Leuchtelementen zu erfassen, werden die Schritte des Ansteuerns 120 und des optischen Erfassens 130 und ggf. der Schritt des Kameraaufnahmenabgleichs 160 für jedes anzusteuernde Leuchtelement wiederholt.

Bei dem Identifizieren 110 kann gleichzeitig eine Zuordnung des identifizierten Leuchtelements zu bestimmten Eigenschaften, z.B. Art, Größe, Form, Lichtfarbe, Anzahl der Leuchtsegmente, maximale spezifizierte Helligkeit und/oder elektrische Kenndaten, vorgenommen werden. Hierzu ist beispielsweise die Identifikationsnummer mit einem Datenbankeintrag verknüpft, wobei in der Datenbank die jeweiligen Eigenschaften hinterlegt sind. Zusätzlich oder alternativ wäre es auch möglich, dass ein 3D-Modell des jeweiligen Leuchtelements zu der jeweiligen Identifikationsnummer in der Datenbank hinterlegt ist. Insofern wird entsprechend weiteren Ausführungsbeispielen gleichzeitig mit dem Identifizieren 110 eine Datenbankabfrage ausgeführt. Ferner wäre es auch denkbar, dass einzelne oder mehrere derartiger Leuchtelement-Spezifikationen bereits auf dem Identifikations-Chip hinterlegt und somit zusammen mit Identifikationsnummer direkt abrufbar sind.

Nachdem nun zu jedem Leuchtelement die genaue Position und die genaue Form und ggf. sogar die Spezifikation (Leuchtstärke, Farbgebung, usw.) bekannt sind, können diese Informationen in dem zuvor ermittelten 3D-Modell (vgl. Schritt 150) kombiniert werden. Hierzu weist das in Fig. 2 dargestellte Verfahren 100' den optionalen Schritt des Kombinierens 170 nach dem Kameraaufnahmenabgleich 160 auf, bei dem die Identifikationen über das Leuchtelement lagerichtig in das 3D-Modell integriert und zusammen mit diesem gespeichert werden. Hierbei können auch die Informationen über die Eigenschaften der Leuchteinheit 12a bis 12b in das dreidimensionale Modell eingepflegt werden. Mit diesen Daten sind nun alle Informationen zusammengetragen, um die Beleuchtungssituation darzustellen und ggf. zu beeinflussen.

Entsprechend weiteren Ausführungsbeispielen kann nun über das so ermittelte dreidimensionale Modell mit den Leuchtelementen eine Manipulation, also beispielsweise ein Ein- und Ausschalten der einzelnen Leuchteinheiten vorgenommen werden. Diese Manipulation kann entweder selektiv je Leuchteinheit oder in kombinierter Form durch Anwählen einer bestimmten Beleuchtungsszene erfolgen, bei der gleichzeitig unterschiedliche Leuchtelemente angesteuert werden. Eine Beleuchtungsszene umfasst typischerweise eine Kombination einer Vielzahl von (ggf. unterschiedlichen) Leuchteinheiten bzw. Segmenten einzelner Leuchteinheiten. Beispiele für derartige Leuchteinheiten sind Fensterlicht (mehrsegmentiges OLED), (farbvariable) Leuchteinheiten oder auch eine zentrale großflächige Deckenleuchte, die beispielsweise mehrere segmentierte OLED-Lichtpanels mit jeweils mehreren einzeln ansteuerbaren Segmenten umfassen, so dass beispielsweise ein Wolkengang an der Zimmerdecke nachgestellt werden kann.

Auf Basis der detektieren unterschiedlichen Leuchtelemente kann auch eine dreidimensionale Darstellung des jeweiligen Raums und der Beleuchtungssituation, z.B. in Form eines virtuellen Rundgangs erfolgen, die das Entwerfen der oben erläuterten Beleuchtungsszene vereinfacht. Ferner ist es möglich, mit dem oben beschriebenen Verfahren eine aktuelle Beleuchtungssituation zu erfassen, um dann im Nachgang mittels einer Lichtplanungssoftware eine Ergänzung bzw. Umgestaltung der Lichtplanung durchzuführen.

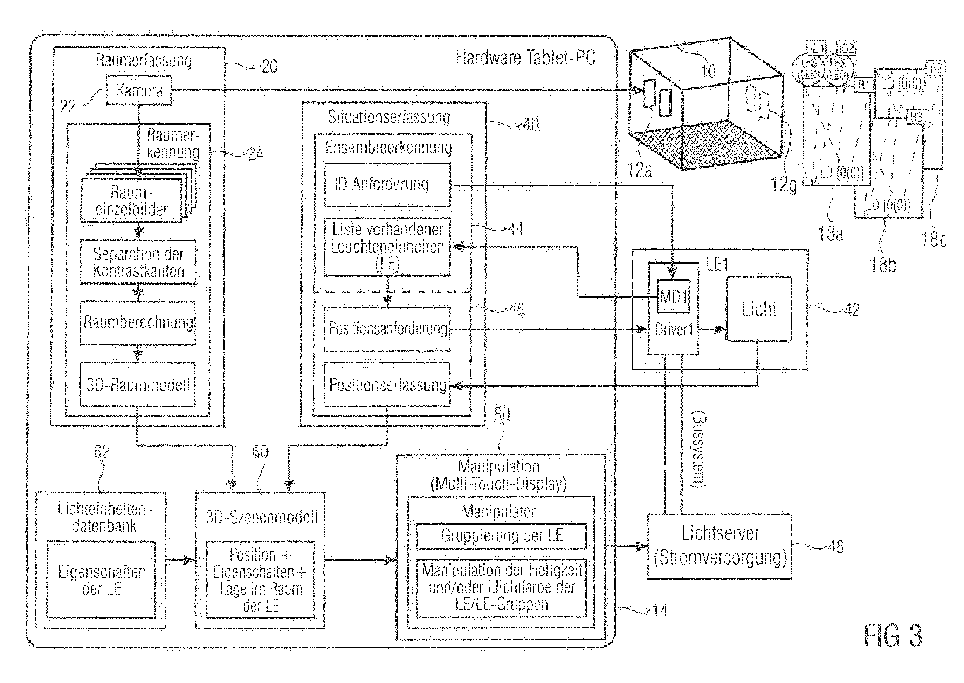

Fig. 3 zeigt ein ganzheitlichen Ansatz für eine Lichtkompositionssystem, welches beispielsweise auf einem Tablet-Computer 14 integriert ist, mit den Modulen 20 zur Raumerfassung, 40 zur Situationserfassung und 60 zur Erstellung des 3D-Modells.

Das Modul 20 zur Raumerfassung weist die Kamera 22 und einen Prozessor zur Raumerkennung 24 auf. Mittels der Kamera 22 wird der Raum 10 mit den Leuchten 12a bis 12g in den Kameraaufnahmen 18a, 18b, 18c erfasst. Der Prozessor 24 berechnet basierend auf den Raumeinzelbildern 18a bis 18c durch Separation der Kontrastkanten das 3D-Modell des Raums 10.

Das Modul 40 dient zur Situationserfassung und ist dazu ausgebildet, die Lampen 12a bis 12g selektiv anzusteuern. Das Modul 40 kann in die zwei Unter-Module 44 zur Identifizierung der Leuchteinheiten 12a bis 12g und 46 zur Ansteuerung derselben untergliedert sein. Zur Ansteuerung ist das Modul 40 bzw. das Unter-Modul 46 mit einem Kommunikationsmodul 42 verbunden, das beispielsweise über einen Bus (z.B. KNX-Bus) mit den Leuchten 12a bis 12g gekoppelt ist. Das Kommunikationsmodul 42 kann in Form eines WLAN-KNX-Bus-Adapters ausgeführt sein, so dass die Steuerbefehle von dem Tablet-Computer 14 in den Bus übertragen werden. Hierbei kann auch ein optionaler Lichtserver 48 zwischengeschaltet sein, der die Schaltbefehle zentral weiterleitet.

Wie oben bereits beschrieben, erfolgt die Erfassung des Feedbacks, also des Leuchtens eines der angesteuerten Leuchteinheiten 12a-12g über eine Kameraaufnahme, die mittels der Kamera 22 genommen wird. Hierbei ist die Funktionseinheit 46 zur Positions- und/oder Formerfassung der Leuchteinheiten 12a bis 12g mit der Kamera 22 verbunden.

Die Daten der Raumerfassung 20 und der Situationserfassung 40 werden in dem 3D-Szenenmodell 60 kombiniert. Fernern können auch noch, wie oben bereits beschrieben, Informationen über die Eigenschaften der Lichteinheit 12a bis 12g mit in das Szenenmodell integriert werden, wobei diese aus einer Datenbank 62 abrufbar sind.

Auf Basis dieser kombinierten Informationen können komplexe Lichtsteuerszenen durch die optionale Manipulationseinheit 80, die ebenfalls in den Tablet-Computer 14 integriert sein kann, abgerufen werden. Hierbei kann die Manipulationseinheit 80 mit dem Lichtserver 48 oder alternativ mit den einzelnen Kommunikationsmodulen der Leuchteinheiten 12a bis 12g (z.B. über den Adapter 42) verbunden sein. Die Steuerung der Lichtsteuerszenen bzw. der Leuchteinheiten erfolgt entweder über vorgegebene Standard-Animationen oder über ein intuitives Multi-Touch-Bedienkonzept, bei dem beispielsweise mittels eines Zeitstrahls Lichtanimationen platziert oder jedes Leuchtengruppen, Leuchtenelement bzw. Leuchtensegment individuell und zugleich einfach animiert werden kann.

Auch wenn oben anders dargestellt, sei an dieser Stelle angemerkt, dass einzelne Module, wie z.B. der Prozessor zur Raumerkennung 24 oder die Bildbearbeitungssoftware zur Positionserfassung 44 auf speziell dafür ausgelegte Server outgesourced sein können. Insofern umfasst ein System zur Erkennung einer Position von mindestens einem über eine jeweilige Identifikationsnummer ansteuerbare Leuchteinheit 12a bis 12g in einer Umgebung 10 zumindest ein Kommunikationsmodul 42 (z.B. WLAN-Funktional-Adapter oder Bluetooth-Funktional-Adapter) und eine Kamera 22.

Auch wenn bei oben dargestellten Ausführungsbeispielen davon ausgegangen wird, dass durch das Ansteuern ein ausgeschaltetes Leuchtelement eingeschaltet wird, kann dies auch umgekehrt erfolgen, nämlich so, dass ein eingeschaltetes Leuchtelement bei Ansteuerung ausgeschaltet wird, wobei bei der zuvor genommenen Kameraaufnahme das jeweilige Leuchtelement eingeschaltet war. Ferner kann bei dem Aufleuchten auch nur ein kurzes Aufleuchten erfolgen.

Bezugnehmend auf Fig. 1a und 1b sei dieser Stelle angemerkt, dass es nicht zwingend erforderlich ist, dass das Ermitteln der Position bzw. Form des angesteuerten Leuchtelements durch einen Kameraabgleich zwischen einer zuvor genommenen Kameraaufnahme und einer aktuellen Kameraaufnahme erfolgt. So ist es entsprechend weiteren Ausführungsbeispielen möglich, dass das angesteuerte Leuchtelement anhand einer lokalen Helligkeitsverteilung in nur einer Kameraaufnahme erfolgt. Hierbei wird mittels eines Algorithmus der hellste Punkt bzw. die hellste Fläche des Bilds (Helldunkelabgleich), also ein lokales Intensitätsmaximum detektiert, das die Position des (leuchtenden) Leuchtelements darstellt. Dieses abgewandelte Verfahren ist insbesondere für Punktleuchtquellen (Spots) anwendbar.

Es sei ferner angemerkt, dass bei der optischen Erkennung (vgl. Schritt 130) neben geometrischen Eigenschaften auch weitere Eigenschaften, wie z.B. die Farbgebung, erkannt werden können.

Auch wenn bei vorangegangenen Ausführungsbeispielen immer von Kameraaufnahmen in Form von Einzelbildern ausgegangen wurde, wird an dieser Stelle angemerkt, dass auch Bildsequenzen (also zeitlich variierende, hintereinander aufgenommene Kameraaufnahmen) zur Erfassung des Raums (vgl. Schritt 140) und zur Erfassung der Position/Form (vgl. Schritt 130) verwendet werden können.

Bezug nehmend auf Fig. 2 sei angemerkt, dass die Ermittlung des dreidimensionalen Modells der Umgebung auch auf Basis weiterer Raumerfassungsmethoden, wie z.B. unter Zuhilfenahme eines 3D-Scanners oder unter Zuhilfenahme eines Laserscanners, erfolgen kann. Deshalb kann das Verfahren 100' anstelle der Schritte 140 und 150 einen Schritt des Ermittelns eines 3D-Modells des Umfelds mittels eines (optischen) Scanners aufweisen.

Bezug nehmend auf Fig. 3 sei angemerkt, dass es alternativ auch denkbar wäre, dass die Bilder 18a bis 18c, die zur Raumerfassung dienen, dem Prozessor 24 zur Raumerkennung nicht direkt über die Kamera 22, sondern über eine andere Quelle, z.B. einem USB-Stick zur Verfügung gestellt werden.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein weiteres Ausführungsbeispiel kann sich also auf ein Verfahren zur Erkennung einer Position und/oder Form von mindestens einem über eine jeweilige Identifikationsnummer ansteuerbaren Leuchtelement in einer Umgebung beziehen, das folgende Schritte umfasst:
- Identifizieren von mindestens einem in der Umgebung vorhandenen Leuchtelement anhand der jeweiligen durch das Leuchtelement übermittelten Identifikationsnummer;
- Ansteuern des identifizierten Leuchtelements, um ein Leuchten des angesteuerten Leuchtelements zu veranlassen; und
- Erfassen des angesteuerten Leuchtelements mittels einer Kameraaufnahme, um die Position, Lage und/oder die Form des angesteuerten Leuchtelements in der Umgebung anhand des Leuchtens zu ermitteln.

Optionaler Weise kann auch der Schritt "Abgleich des Leuchtelementtyps (welcher in der Identifikationsnummer hinterlegt sein kann) mit einer lokal oder über Internet abrufbaren Datenbank zur exakten Darstellung des Leuchtelements auf der Bedienoberfläche" nach dem Schritt "Erfassen des angesteuerten Leuchtelements" vorgesehen sein.

Entsprechend Ausführungsbeispielen gehören die zu erkennenden Leuchtelemente zu der Gruppe, die eine mit einem Kommunikationsmodul gekoppelte LED, eine mit einem Kommunikationsmodul gekoppelte OLED und eine mit einem Kommunikationsmodul gekoppeltes Segmentdisplay mit einzeln ansteuerbaren Segmenten umfasst. Dieses Verfahren kann den optionalen Schritt des Speicherns der ermittelten Position und/oder Form in einem dreidimensionalen Model umfassen. Des Weiteren wäre auch ein alternativer Schritt des Gruppierens von mehreren Leuchtelementen denkbar, die eine gemeinsame Eigenschaft aufweisen.

Wie oben bereits erläutert, kann ein zentraler Bestandteil des Systems 14 ein Smartphone oder Tablet-PC sein, auf dem eine entsprechende Licht-Steuerungs-Software installiert ist, in deren Programmcode die oben beschriebenen Verfahrensschritte integriert sind. Also können je nach bestimmten Implementierungsanforderungen Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Insofern bezieht sich ein Ausführungsbeispiel auf ein System zur Erkennung einer Position und/oder Form von mindestens einem über eine jeweilige Identifikationsnummer ansteuerbaren Leuchtelement in einer Umgebung. Das System umfasst:
- ein Kommunikationsmodul, das ausgebildet ist, um Kommunikationssignale, die die Identifikationsnummer umfassen, zu senden und/oder zu empfangen, so dass anhand der Identifikationsnummer ein in der Umgebung vorhandenes Leuchtelement identifizierbar ist, wobei das Kommunikationsmodul ferner ausgebildet ist, um das identifizierte Leuchtelement anzusteuern, um so ein Leuchten des angesteuerten Leuchtelements zu veranlassen; und
- eine Kamera, die ausgebildet ist, um eine Kameraaufnahme des angesteuerten Leuchtelements zu erfassen, um die Position und/oder die Form des angesteuerten Leuchtelements in der Umgebung anhand des Leuchtens zu ermitteln.

Das Kommunikationsmodul kann z.B. ausgebildet sein, um WLAN-Funksignale, Bluetooth-Funksignale und/oder andere Kurzstrecken-Funksignale zu senden und/oder zu empfangen. Das System kann optional einen Grafikprozessor umfassen, der ausgebildet ist, um die Position und/oder die Form des angesteuerten Leuchtelements auf Basis des Kameraaufnahmenabgleichs zwischen der erfassten Kameraaufnahme und einer weiteren zuvor erfassten Kameraaufnahme des Leuchtelements zu ermitteln und/oder der ausgebildet ist, um auf Basis der mindestens einen weiteren zuvor erfassten Kameraaufnahme ein dreidimensionales Modell der Umgebung zu ermitteln. Der Grafikprozessor kann direkt oder mittels einer Datenverbindung mit der Kamera und dem Kommunikationsmodul verbunden sein. Entsprechend alternativen Ausführungsbeispielen können das Kommunikationsmodul und die Kamera in einen Computer, in einen Tablet-Computer oder in ein Smartphone integriert sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Erkennung einer Position und/oder Form von mindestens einem über eine jeweilige Identifikationsnummer ansteuerbaren Leuchtelement (12a-12g) in einer Umgebung (10), mit folgenden Schritten:
Identifizieren (110) von mindestens einem in der Umgebung (10) vorhandenen Leuchtelement (12a-12g) anhand der jeweiligen durch das Leuchtelement (12a-12g) übermittelten Identifikationsnummer;
Ansteuern (120) des identifizierten Leuchtelements (12a-12g), um ein Leuchten des angesteuerten Leuchtelements (12a-12g) zu veranlassen; und
Erfassen (130) des angesteuerten Leuchtelements (12a-12g) mittels einer Kameraaufnahme, um die Position und/oder die Form des angesteuerten Leuchtelements (12a-12g) in der Umgebung (10) anhand des Leuchtens zu ermitteln.

2. Verfahren gemäß Anspruch 1, wobei das Ansteuern (120) und Erfassen (130) gleichzeitig erfolgt.

3. Verfahren gemäß Anspruch 1 oder 2, wobei das Verfahren einen weiteren Schritt des Erfassens (140) einer weiteren Kameraaufnahme (18a-18c) vor dem Ansteuern (120) aufweist.

4. Verfahren gemäß einem der Ansprüche 1 bis 3, wobei das Verfahren einen weiteren Schritt des Ermittelns (150) eines dreidimensionalen Models der Umgebung (10) auf Basis mindestens einer weiteren zuvor erfassten Kameraaufnahme (18a-18c) aufweist, und/oder,
wobei das Ermitteln (150) des dreidimensionalen Models auf einer Detektion von Kanten in der mindestens einen weiteren zuvor erfassten Kameraaufnahme (18a-18c) erfolgt.

5. Verfahren gemäß einem der Ansprüche 1 bis 4, wobei bei dem Ermitteln der Position und/oder der Form ein Kameraaufnahmenabgleich (160) zwischen der erfassten Kameraaufnahme und einer weiteren zuvor erfassten Kameraaufnahme (18a-18c) des Leuchtelements (12a-12g) durchgeführt wird.

6. Verfahren gemäß einem der Ansprüche 1 bis 5, wobei das Verfahren einen weiteren Schritt des Vergleichens der erfassten Kameraaufnahme mit einer weiteren zuvor erfassten Kameraaufnahme (18a-18c) aufweist, um einen gemeinsamen Bildausschnitt zu erkennen und in diesem eine lokale Helligkeitsdifferenz zu ermitteln, die die zu ermittelnde Positionen und/oder Form des Leuchtelements (12a-12g) darstellt.

7. Verfahren gemäß einem der Ansprüche 1 bis 4, wobei das Ermitteln der Position und/oder der Form auf einer Helligkeitsverteilung basiert und ein lokales Intensitätsmaximum die zu ermittelnde Position und/oder Form des Leuchtelements (12a-12g) darstellt.

8. Verfahren gemäß einem der Ansprüche 1 bis 7, wobei das Identifizieren (110), Ansteuern (120) und Erfassen (130) für ein weiteres mittels einer weiteren Identifikationsnummer ansteuerbares, in der Umgebung (10) vorhandenes Leuchtelement (12a-12g) wiederholt wird.

9. Verfahren gemäß einem der Ansprüche 1 bis 8, wobei das Verfahren den Schritt des Ermittelns von Eigenschaften des identifizierten Leuchtelements (12a-12g) anhand von einem mittels der Identifikationsnummer zuordenbaren Datenbankeintrags (62) oder anhand von Informationen, die durch das Leuchtelement (12a-12g) zusammen mit der Identifikationsnummer übermittelt werden, umfasst,
wobei die Eigenschaften aus einer Gruppe stammen, die die Form des Leuchtelements (12a-12g), eine Beleuchtungs-Stärke, eine Beleuchtungs-Farbe, eine Segmentzahl, eine Ausrichtung des Leuchtelements (12a-12g), einem Beleuchtungs-Typ und/oder eine lokale Zusammengehörigkeit zu einem weiteren Leuchtelement (12a-12g) umfasst.

10. Verfahren gemäß einem der Ansprüche 1 bis 9, wobei die Kameraaufnahme und/oder die weitere Kameraaufnahme (18a-18c) eine Vielzahl von variierenden Bildern aufweist.

11. Verfahren gemäß einem der Ansprüche 1 bis 10, wobei das Identifizieren (110), Ansteuern (120) und Erfassen (130) automatisch durchgeführt wird.

12. Computerprogramm mit einem Programmcode zur Durchführung des Verfahrens nach einem der Ansprüche 1 bis 11, wenn das Programm auf einem Computer, einem Tablet-Computer oder einem Smartphone abläuft.

13. System (14) zur Erkennung einer Position und/oder Form von mindestens einem über eine jeweilige Identifikationsnummer ansteuerbaren Leuchtelement (12a-12g) in einer Umgebung (10), mit folgenden Merkmalen:
einem Kommunikationsmodul (42), das ausgebildet ist, um Kommunikationssignale, die die Identifikationsnummer umfassen, zu senden und/oder zu empfangen, so dass anhand der Identifikationsnummer ein in der Umgebung (10) vorhandenes Leuchtelement (12a-12g) identifizierbar ist, wobei das Kommunikationsmodul (42) ferner ausgebildet ist, um das identifizierte Leuchtelement (12a-12g) anzusteuern,
um so ein Leuchten des angesteuerten Leuchtelements (12a-12g) zu veranlassen;
und
einer Kamera (22), die ausgebildet ist, um eine Kameraaufnahme des angesteuerten Leuchtelements (12a-12g) zu erfassen, um die Position und/oder die Form des angesteuerten Leuchtelements (12a-12g) in der Umgebung (10) anhand des Leuchtens zu ermitteln.

14. System (14) gemäß Anspruch 13, wobei die Ansteuerung des identifizierten Leuchtelements (12a-12g) mittels des Kommunikationsmoduls (42) und das Erfassen (130) der Kameraaufnahme mittels der Kamera (22) synchronisiert sind.

15. System (14) gemäß einem der Ansprüche 18 bis 20, wobei das System (14) ferner ausgebildet ist, um das identifizierte und hinsichtlich der Position und/oder der Form bestimmte Leuchtelement (12a-12g) und/oder Lichtszenen, die mindestens zwei identifizierte und hinsichtlich der Position und/oder der Form bestimmte Leuchtelemente (12a-12g) umfasst, zu steuern.
